(19) Europäisches Patentamt
European Patent Office
Office européen des brevets

(11)  **EP 3 421 313 B1**

(12)  **EUROPEAN PATENT SPECIFICATION**

(45) Date of publication and mention
of the grant of the patent:
**11.12.2019   Bulletin 2019/50**

(51) Int Cl.:
***B60W 30/095*** *(2012.01)*   ***G08G 1/16*** *(2006.01)*
***B60W 30/00*** *(2006.01)*

(21) Application number: **17177936.6**

(22) Date of filing: **26.06.2017**

(54) **A VEHICLE SAFETY SYSTEM**

FAHRZEUGSICHERHEITSSYSTEM

SYSTÈME DE SÉCURITÉ DE VÉHICULE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**02.01.2019   Bulletin 2019/01**

(73) Proprietor: **Veoneer Sweden AB**
**447 83 Vårgårda (SE)**

(72) Inventors:
• **PÅLSSON, Carl-Johan**
  **44834 Floda (SE)**
• **ROSÉN, Erik**
  **44143 Alingsas (SE)**

(74) Representative: **Beattie, Alex Thomas Stewart**
**Forresters IP LLP**
**Skygarden**
**Erika-Mann-Strasse 11**
**80636 München (DE)**

(56) References cited:
**EP-A1- 2 918 467      US-A1- 2012 035 846**
**US-A1- 2016 075 332**

**Description**

This invention relates to a vehicle safety system, and in particular to a system which analyses signals from vehicle sensors to detect pedestrian or other objects ahead of the vehicle.

Many modern vehicles include one or more sensors which allow the vehicle to detect the presence of an object ahead of the vehicle, which is, or which may be at a future time, in the path of travel of the vehicle.

US patent publication no. US2016/0075332 discloses a system which determines the forward rate of travel of the vehicle, and also the position and lateral speed of travel of a pedestrian detected ahead of the vehicle. The system disclosed in this document aims to determine whether, based on this information, the vehicle is likely to collide with the pedestrian. Safety measures, such as early braking or activation of the vehicle's lights and/or horn to alert the pedestrian, may be engaged to help avoid a collision with the pedestrian.

EP2918467 discloses a drive assist device which includes: an approach degree calculator configured to calculate a first approach degree of a vehicle to an object in a vehicle traveling direction and to calculate a second approach degree of the vehicle to the object in a direction that intersects the vehicle traveling direction based on a relative velocity between the vehicle and the object; and a drive assist control unit configured to control execution of drive assist based on the first approach degree and the second approach degree.

US2012/035846 A1 and US2016075322 A1 also show collision avoidance systems.

It is an object of the present invention to provide an improved safety system of this type.

Accordingly, one aspect of the present invention provides a safety system for a vehicle, the safety system comprising: a first sensor arrangement to determine a current velocity of the vehicle; a second sensor arrangement to detect a mobile object exterior to the vehicle, and determine a current position and velocity of the mobile object relative to the vehicle; a safety device which may be activated to protect an occupant of the vehicle and/or the mobile object; and a control unit operable to: receive and analyse signals from the first and second sensor arrangements determine whether the vehicle will collide with the object if the current velocities of the vehicle and of the object are maintained, and if so to determine the time and position of the collision; and generate an activation signal to activate the safety device based on the analysis of the signals from the first and second sensor arrangements, wherein the analysis of the signals from the first and second sensor arrangements comprises: defining a vehicle front line extending across all or part of the front of the vehicle, and calculating likely future movement of the front line through space to determine a vehicle plane, in both space and time coordinates, comprising the future path of the vehicle front line through space based on the calculated likely future movement of the front line; defining an expected future trajectory for the mobile object; and calculating the position and time of an intersection between the vehicle plane and the expected future trajectory of the mobile object, wherein the calculated position includes a position of the intersection along the vehicle front line.

Advantageously, the first sensor arrangement is operable to determine a current acceleration of the vehicle; and the calculation of the likely future movement of the front line through space assumes that the current acceleration of the vehicle will be maintained.

Preferably, the second sensor arrangement is operable to determine a current acceleration of the mobile object; and the defining of the expected future trajectory of the mobile object assumes that the current acceleration of the mobile object will be maintained.

Conveniently, the calculated time of the intersection is

$$t = \frac{-B \pm \sqrt{B^2 - 2CA}}{C}$$

Where A represents the calculated position of the vehicle relative to the object, B represents the calculated speed of the vehicle relative to the object, and C represents the calculated acceleration of the vehicle relative to the object.

Advantageously,

$$A = \begin{vmatrix} a_x & f'_{sx} \\ a_y & f'_{sy} \end{vmatrix}, \ B = \begin{vmatrix} b_x & f'_{sx} \\ b_y & f'_{sy} \end{vmatrix}, \ C = \begin{vmatrix} c_x & f'_{sx} \\ c_y & f'_{sy} \end{vmatrix},$$

Where: $a_x$ and $a_y$ represent the zero order component of a polynomial representing the difference between the position of the vehicle and the position of the mobile object along the x and y axes; $b_x$ and $b_y$ represent the first order component of a polynomial representing the difference between the velocity of the vehicle and the velocity of the mobile object along the x and y axes; $c_x$ and $c_y$ represent the second order component of a polynomial representing the difference between the acceleration of the vehicle and the acceleration of the mobile object along the x and y axes; and $f'_{sx}$ and $f'_{sy}$ represent the rate of change of the line parallel to the front bumper of the vehicle along the x and y axes.

Preferably, the yaw rate of both the vehicle and the mobile object are assumed to be zero.

Conveniently, the position of the intersection along the vehicle front line is calculated as:

$$ s = -\vec{q}^{\top}\left(\vec{g}(t) - \vec{h}(t)\right) $$

Where: g(t) describes the location of a point representing the position of the vehicle over time; h(t) describes the location of a point representing the position of the mobile object over time; and q(t) represents the vector inverse of $f'_s$, which describes the orientation of a line parallel to the front bumper of the vehicle.

Advantageously, the formula for calculating the position and time of the intersection is stored in a memory of the vehicle, and is not calculated in real time.

Preferably, the first sensor arrangement is operable to determine a current yaw rate of the vehicle; and the calculation of the likely future movement of the front line through space assumes that the current yaw rate of the vehicle will be maintained, and preferably also wherein: the second sensor arrangement is operable to determine a current yaw rate of the mobile object; and the defining of the expected future trajectory of the mobile object assumes that the current yaw rate of the mobile object will be maintained.

Conveniently, the position and time of the intersection are calculated numerically.

Advantageously, the mobile object is represented in the calculations by a single point in space.

Preferably, the mobile object is represented in the calculations by a plurality of points, and wherein the position and time of an intersection is calculated for each of the points.

Conveniently, the calculated position and time of the intersection between the vehicle plane and the expected future trajectory of the mobile object is based on the one of the points which is calculated to intersect with the vehicle plane at the earliest time.

Another aspect of the present invention provides a vehicle incorporating a safety system according to any preceding claim.

A further aspect of the present invention provides a method of controlling one or more safety devices of a vehicle, the method comprising the steps of: determining a current velocity of the vehicle; detecting a mobile object exterior to the vehicle, and determining a current position and velocity of the mobile object relative to the vehicle; determining whether the vehicle will collide with the object if the current velocities of the vehicle and of the object are maintained, and if so determining the time and position of the collision; and generating an activation signal to activate the safety system based on the determination, wherein the determination comprises the steps of: defining a vehicle front line extending across all or part of the front of the vehicle, and calculating likely future movement of the front line through space to determine a vehicle plane, in both space and time coordinates, comprising the future path of the vehicle front line through space based on the calculated likely future movement of the front line; defining an expected future trajectory for the mobile object; and calculating the position and time of an intersection between the vehicle plane and the expected future trajectory of the mobile object, wherein the calculated position includes a position of the intersection along the vehicle front line.

In order that the invention may be more readily understood embodiments thereof will now be described, by way of example, with reference to the accompanying drawings, in which:

Figure 1 is a schematic view of a vehicle incorporating a system embodying the present invention;

Figures 2 and 3 show the vehicle of figure 1 in motion; and

Figures 4 and 5 show graphs representing the motion of the vehicle of figure 1, along with an external mobile object.

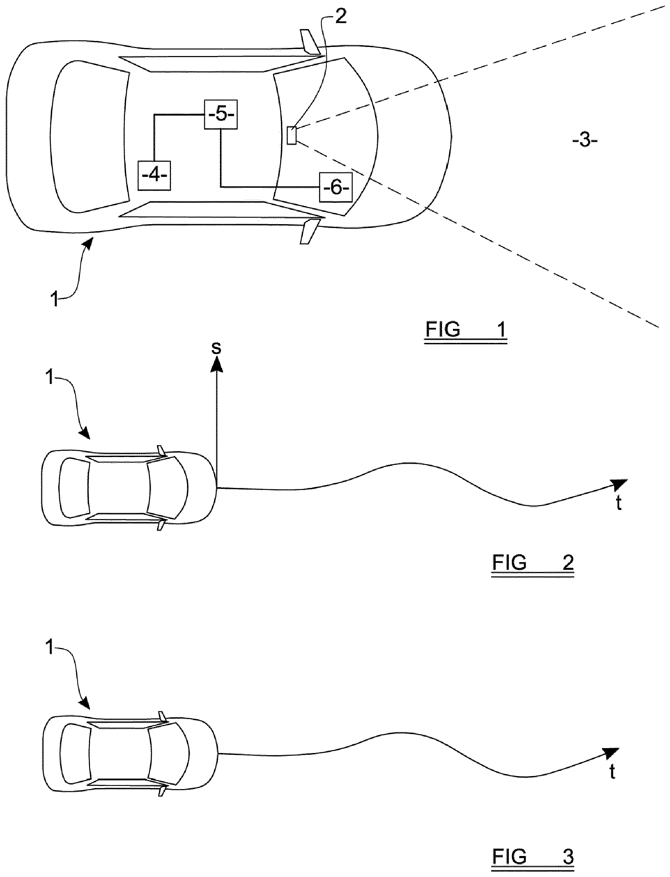

Referring firstly to figure 1, a vehicle 1 is shown schematically, from above. The vehicle 1 includes at least one sensor 2 which detects the presence of objects in a region of space 3 which extends forwardly in front of the vehicle 1. The skilled person will appreciate that several different kinds of sensor are suitable for this purpose. For instance, one or more mono or stereo cameras may be used. These cameras may operate in any suitable frequencies, for instance optical or infrared. Cameras operating in infrared frequencies are typically placed at or near the front of the vehicle, forward of the vehicle's engine. This is because, during driving, the engine is likely to get hot, and if an infrared camera is positioned rearwardly of the engine then the "glow" from the heat of the engine may distort or dominate images gathered by the camera.

Alternatively, or in addition, one or more radar or lidar sensors may be used. These sensors may be placed anywhere suitable in the vehicle, but typically such sensors will be placed inside the vehicle's windscreen, near the top edge thereof, for instance in the region where the rear-view mirror is attached to the interior of the windscreen. This allows the sensors to be located relatively high up, so as to command a better field of view, and also allows the sensors to be protected behind the windscreen itself.

Any other suitable sensor(s) may be used, and also any appropriate combination of sensors may be employed. As the skilled reader will be aware, in recent years many vehicle systems have combined information from different sensors to improve the accuracy of detection, and such systems are within the scope of the present invention.

One or more further sensors 4 are also incorporated to determine the speed, direction of travel and acceleration of the vehicle 1. Such sensors may include:

- wheel rotation sensors, to determine the rate of rotation of the or all of the wheels of the vehicle;
- a GPS or similar receiver, to determine directly the vehicle's position on the Earth's surface;
- one or more pedal sensors, to determine the degree by which one or more of the vehicle's pedals are depressed by the driver of the vehicle;
- a steering wheel rotation sensor, to determine the angle at which the steering wheel is turned by the driver, and also the rate of change of angle of the steering wheel; and
- sensors to detect the behaviour of the driver, for instance sensors which detect the direction in which the driver is looking. This may provide information as to the likely future trajectory of the vehicle.

These sensors are known *per se* and will not be discussed in detail here.

Signals from the sensors are passed to a control unit 5 of the vehicle. The control unit 5 may comprise one central processor, or may comprise two or more distributed processors throughout the vehicle. The processor is operable to receive and analyse signals from the sensors mentioned above.

The vehicle also includes at least one safety device 6 which may be activated under the control of the processor. The safety devices may, upon activation, serve to alter the speed and/or trajectory of the vehicle 1 to reduce the possibility of a collision, to protect a pedestrian outside the vehicle 1 in the event of a collision with the vehicle 1, and/or to protect the occupants of the vehicle 1 itself.

These safety devices may be reversible or irreversible, and may include:

- an automated braking system, which may activate the brakes of the vehicle;
- an automated steering system, which may alter the angle of steer of the vehicle;
- one or more external air-bags;
- one or more bonnet lifters;
- one or more internal air-bags;
- one or more seat belt pretensioners;
- one or more systems which may serve to alert the driver of the vehicle to the presence of a pedestrian or other object, such as a visual, auditory or haptic alert; and
- one or more systems which may serve to alert a pedestrian to the presence of a vehicle, for instance by illuminating one or more lights of the vehicle (such as the vehicle's headlights) or producing a sound, for instance by sounding the vehicle's horn.

The skilled reader will appreciate that, as a result of the information from the various sensors 2, 4 discussed above, the vehicle's processor 5 will be able to activate vehicle devices 6 which will reduce the likelihood of a crash situation occurring, and/or reduce the likely harm caused to one or more vehicle occupants, or one or more individuals with which the vehicle 1 may collide, if a crash does occur.

One example of an algorithm that may be used by the vehicle's processor 5 to analyse the signals received from the various sensors 2, 4 is described below.

In this example, both spatial coordinates and time are considered together, and considered to include the following orthogonal axes:

$$\begin{bmatrix} x \\ y \\ t \end{bmatrix}$$

Where x and y are orthogonal spatial axes, with x representing the forward-backward direction of the vehicle, y representing the left-right direction of the vehicle, and t representing time. These axes are collectively referred to below as "space-time".

Two functions are defined. Firstly, with reference to figure 2 (which schematically shows the vehicle 1 in motion), a parametric function of a plane or surface in space-time is defined as:

$$P(s,t) = \vec{f}(s) + \vec{g}(t) = \begin{bmatrix} f_x(s) \\ f_y(s) \\ 0 \end{bmatrix} + \begin{bmatrix} g_x(t) \\ g_y(t) \\ t \end{bmatrix}$$

where s represents space (including the x and y directions), and t represents time. In this instance, this plane/surface represents the movement of the front edge of the vehicle 1 (e.g. a line extending across the front edge of the bonnet) over time, with s representing distance along a line parallel with the front edge of the bumper.

P(s, t) describes all points on all lines parallel with the front bumper at any time t. f(s) describes the orientation of the line parallel to the vehicles front bumper, and g(t) describes the location of a point (for instance a corner, or the centre of a bumper, but any other point may also be used) representing the position of the vehicle over time.

Secondly, with reference to figure 3 (which again schematically shows the vehicle 1 in motion), a parametric function of a curve in space-time is defined as:

$$L(t) = \vec{h}(t) = \begin{bmatrix} h_x(t) \\ h_y(t) \\ t \end{bmatrix}$$

Here the curve describes how a point on a detected object external to the vehicle (e.g. a pedestrian) moves through space (x,y) over time. L(t) therefore represents the position of the external object for a time t, and h(t) describes the location of a point (for instance a corner, or the centre of a bumper, but any other point may also be used) representing the position of the external object over time.

In the above definitions of the plane and curve involve the following constraints/assumptions:

$$f_i(s) \in \mathcal{P}^1$$

$$f_i(0) = 0$$

$$g_i(t) \in \mathcal{P}^n$$

$$h_i(t) \in \mathcal{P}^m$$

$$\vec{f}(s) \perp \vec{g}(s)$$

$$\vec{f}(s) \parallel xy - plane$$

Where $\mathcal{P}^n$ and $\mathcal{P}^m$ are polynomials of order n and m respectively.
The function arguments when writing functions and derivatives will be omitted and written in short notation, i.e.

$$f_x(s) = f_x$$

$$\frac{\partial f_x(s)}{\partial s} = f'_{sx}$$

The aim is to find s and t where P and L intersect, i.e. the predicted time and position of a collision between the vehicle and the external object. Here $f'_{sx}$ and $f'_{sy}$ (which appears below) represent the rate of change of the line parallel to the front bumper of the vehicle (1) along the x and y axes, respectively.

In this example, the solution is found by considering the point normal description of a plane.

$$\vec{N} \cdot (p - p_0) = 0$$

*Where $\vec{N}$ describes the normal in each point of the surface. The points $p_1$ and $p_0$ are points in space-time defined by the two spatial axes (x, y) and the temporal axis (t). The normal may not be constant, depending on the magnitude of n.* When these points fulfil the criteria mentioned below, these points will lie on the plane spanned by P(s, t).

$$\vec{N}(t) = \frac{\partial P}{\partial s} \times \frac{\partial P}{\partial t} = \begin{bmatrix} f'_{sx} \\ f'_{sy} \\ 0 \end{bmatrix} \times \begin{bmatrix} g'_{tx} \\ g'_{ty} \\ 1 \end{bmatrix} = \begin{bmatrix} f'_{sy} \\ -f'_{sx} \\ f'_{sx}g'_{ty} - f'_{sy}g'_{tx} \end{bmatrix}$$

According to the above, if two points lie on a plane then the vector between them is parallel to the plane and also orthogonal to the normal vector $\vec{N}$.

By selecting one point from the plane equation and one from the line equation, the equation given above can be fulfilled only when the line intersects the plane - in other words, where the projected trajectory of the external object (e.g. pedestrian) intersects with the projected region defined by the front edge of the vehicle. By having the plane function linear along the front of the vehicle, all vectors between two points on the plane must be parallel to the plane.

The time t of the collision may be found as follows.

By substituting p and $p_0$ with P(s, t) and L(t) respectively, we can place the first point on the plane and the other one on the line

$$0 = \vec{N} \cdot (P(s,t) - L(t)) = \begin{bmatrix} f'_{sy} \\ -f'_{sx} \\ f'_{sx}g'_{ty} - f'_{sy}g'_{tx} \end{bmatrix}^{\mathsf{T}} \begin{bmatrix} f_x + g_x - h_x \\ f_y + g_y - h_y \\ 0 \end{bmatrix}$$

Evaluating the dot product

$$0 = f'_{sy}(f_x + g_x - h_x) - f'_{sx}(f_y + g_y - h_y)$$

Separating expressions

$$0 = \underbrace{f'_{sy}f_x - f'_{sx}f_y}_{=0} + f'_{sy}(g_x - h_x) - f'_{sx}(g_y - h_y)$$

The expression $f'_{sy}f_x - f'_{sx}f_y = 0$ is true when considering the constraints/assumptions mentioned above, i.e. constant acceleration and zero yaw rate in both objects.

The expressions $g_i$ - $h_i$ can be viewed as the difference between two polynomials resulting in a new polynomial which can be expressed as

$$a_i + b_i t + c_i \frac{t^2}{2} + \cdots$$

$$0 = f'_{sy}\left(a_x + b_x t + c_x \frac{t^2}{2} + \cdots\right) - f'_{sx}\left(a_y + b_y t + c_y \frac{t^2}{2} + \cdots\right)$$

Where $a_x$ and $a_y$ represent the zero order component of a polynomial which in this case would be the difference between the position of the vehicle (1) and the position of the external object along the x and y axes.

$b_x$ and $b_y$ represent the first order component of a polynomial which in this case would be the difference between the velocity of the vehicle (1) and the velocity of the external object along the x and y axes.

$c_x$ and $c_y$ represent the second order component of a polynomial which in this case would be the difference between the acceleration of the vehicle (1) and the acceleration of the external object along the x and y axes.

This can be separated by powers of t

$$0 = \left(f'_{sy} a_x - f'_{sx} a_y\right) + \left(f'_{sy} b_x - f'_{sx} b_y\right)t + \left(f'_{sy} c_x - f'_{sx} c_y\right)\frac{t^2}{2} + \cdots$$

Recognising the 2D determinants

$$0 = \underbrace{\begin{vmatrix} a_x & f'_{sx} \\ a_y & f'_{sy} \end{vmatrix}}_{A} + \underbrace{\begin{vmatrix} b_x & f'_{sx} \\ b_y & f'_{sy} \end{vmatrix}}_{B} t + \underbrace{\begin{vmatrix} c_x & f'_{sx} \\ c_y & f'_{sy} \end{vmatrix}}_{C} \frac{t^2}{2} + \cdots$$

Here A represents the calculated position of the vehicle relative to the object, B represents the calculated speed of the vehicle relative to the object, and C represents the calculated acceleration of the vehicle relative to the object. More specifically, A is the signed unnormalised projected position distance between the line parallel to the front bumper of the vehicle 1 and the point representing the position of the external object, B is the signed unnormalised projected velocity difference between the line parallel to the front bumper of the vehicle 1 and the remote point representing the position of the external object, and C is the signed unnormalised projected acceleration difference between the line parallel to the front bumper of the vehicle 1 and the remote point representing the position of the external object.

This results in a polynomial

$$0 = A + Bt + C\frac{t^2}{2} + \cdots$$

With the order

$$k = \max(m, n)$$

And the following solutions for small $k$

- $k = 0 \Rightarrow$ *no solution*

- 
$$k = 1 \Rightarrow t = -\frac{A}{B}$$

- 
$$k = 2 \Rightarrow t = \frac{-B \pm \sqrt{B^2 - 2CA}}{C}$$

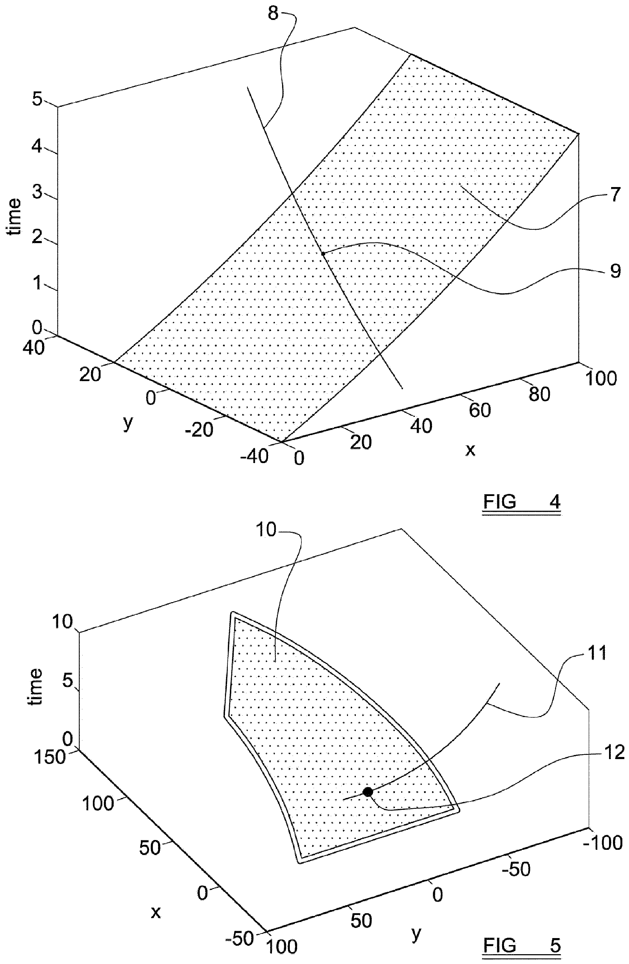

This is represented graphically in figure 4, which shows a graph of the x (direction of travel of vehicle) and y (direction transverse to the direction of travel, i.e. generally parallel with the front edge of the vehicle 1) directions, and also time (represented by t). A plane 7 is shown in the graph, representing the likely future trajectory of the front edge of the vehicle 1. A line 8 is also shown, representing the calculated future path of the external object. A point 9 is calculated, with this point being the intersection between the plane 7 and the line 8. This point 9 therefore corresponds to the predicted time and location of a collision between the vehicle 1 and the external object.

If the acceleration is zero for both of the vehicles, C above becomes zero and the solution becomes

$$t = -\frac{A}{B}$$

As noted above.

With the time variable solved, it is possible to find where on the "front" the intersection occurred, i.e. s. This is done by finding the intersection between the surface P and the curve L.

$$\vec{0} = P(s,t) - L(t) = \vec{f}(s) + \vec{g}(t) - \vec{h}(t)$$

According to the constraints/assumptions mentioned in the beginning it is possible to rewrite the expression to the following

$$\vec{0} = \vec{f_s'}\, s + \vec{g}(t) - \vec{h}(t)$$

Reordering the terms leaves a vector equation

$$\vec{f_s'}\, s = -\left(\vec{g}(t) - \vec{h}(t)\right)$$

Multiplying both sides with a vector $\vec{q}^{\mathsf{T}}$ (which represents the vector inverse of $f_s'$) such that $\vec{q}^{\mathsf{T}}\vec{f_s'} = 1$

$$s = -\vec{q}^{\mathsf{T}}\left(\vec{g}(t) - \vec{h}(t)\right)$$

The vector $\vec{q}^{\mathsf{T}}$ may be calculated, for example, using the squared L2 norm. One solution for $\vec{q}$ is

$$\vec{q} = \frac{\vec{f_s'}}{\vec{f_s'} \cdot \vec{f_s'}}$$

The time and position of the collision can therefore, in certain cases, be calculated analytically.

It will be understood that arriving at an analytical solution confers significant benefits when compared to the calculation of individual, *ad hoc* numerical solutions to calculate likely time and position of impact when each potential impact event occurs. An analytical solution, which can be calculated pre-emptively and stored in a memory which is accessible for the vehicle processor, allows the calculation to be carried out very swiftly and reliably, without using valuable processing resources.

In more general terms than the specific example described above, in embodiments of the invention the vehicle's processor employs an algorithm in which a plane is defined, with the plane representing the space in which the vehicle may move. If the vehicle is assumed to be travelling over a generally flat surface, the plane will be parallel with this flat surface. The height of the plane above the flat surface may be defined to be of the same, or substantially the same, height as a part of the vehicle which is most likely to make first contact with an object with which the vehicle collides, for instance the front bumper of the vehicle.

A region of the plane is defined, which comprises the part of the plane corresponding to the projected future trajectory of the front edge of the vehicle as the vehicle moves forwardly through space-time.

An object external to the vehicle, which is detected by the vehicle sensors or is otherwise communicated to the vehicle, for instance through vehicle-to-vehicle communication ("V2V communication") is preferably represented by a point.

In other embodiments, an object external to the vehicle may be represented by a plurality of points, and each individual point will be analysed in the same way as the single point included in the discussion below. In the case of another vehicle, one point may be defined for each corner of the vehicle. For other objects which are detected, such as a pedestrian, two or more points may be defined at positions which appear to correspond to points on the external surface of the object, and the skilled person will realise how this may be achieved. In these examples, if one or more of the points are calculated to intersect with the predicted future path of the vehicle, it is preferred that a future impact with the external object is based upon the point which is calculated to intersect with the predicted future path of the vehicle at the earliest time.

To return to the example in which the external object is represented by a single point, the projected trajectory of the point through space time is also modelled, based on the current detected position and velocity of the object.

An intersection between the region of the plane and the point representing the external object is then calculated.

If the point of intersection appears in the past (i.e. at a time before the present time), it may be calculated that the projected trajectory of the vehicle and the object are diverging, and that no future collision is likely.

However, if the intersection occurs in the future, the algorithm may then calculate the time at which the collision will take place. In addition, the position of the collision along the length of the front edge of the vehicle may be determined.

With reference to figure 5, a further graph is shown representing analysis of the situation where the yaw rate of the vehicle 1 and of the external object are not assumed to be zero. The yaw rate of the vehicle 1 may be determined through any suitable means (e.g. through the use of on-board accelerometers, a positioning system such as GPS, through detection of the angle of steering wheel, or any combination of these). The yaw rate of the external object may be detected by the vehicle's sensors 2, as described above, through tracking of the motion of the external object over time.

Where the yaw rate of the vehicle 1 and of the external object are not assumed to be zero, the analytical solution presented above may not apply, and in this case a numerical solution may be employed, i.e. a solution that uses one or more numerical approximations to arrive at solutions to the available equations, rather than one that relies on a pre-defined or "closed" solution. The skilled reader will appreciate how the analysis set out above may be adapted to generate a suitable numerical solution when the yaw rate of the vehicle 1 and/or of the external object are not assumed to be zero.

Returning to figure 5, this graph once again shows the x, y and t axes. In common with figure 4, a plane 10 is defined, representing the calculated likely future trajectory of the front edge of the vehicle 1. A line 11 is also defined, representing the calculated future trajectory of the external object, and a point 12 of intersection of this plane 10 and line 11 is also calculated. Once again, this point 12 represents the calculated time and position of an impact between the vehicle 1 and the external object.

To calculate a numerical solution, one route would be to use the bisection method to get a starting point, and then use a faster method such as the Newton-Raphson method or the Gauss-Newton method. The skilled reader will understand how these approaches may be used,

As discussed above, if a future collision appears to be imminent or likely, then one or more vehicle safety systems may be activated. Which system is activated may depend upon, for instance, the projected speed of the impact, and the projected time until the impact. If the speed of the vehicle and the object is relatively low, and/or the collision is projected to be a relatively long time into the future, the system may be activated to try and warn the driver of the vehicle and/or the object (if the object is a vehicle with its own driver, or a pedestrian), to try and cause the driver and/or the external object to take action to avoid the collision.

If the speed of the vehicle and the object is relatively high, and/or the collision is projected to occur within a relatively short space of time, active safety systems such as internal or external airbags may be deployed, as discussed above.

It will be understood that the use of safety systems embodying the invention may result in collision detection which, compared to existing techniques, is fast, consumes fewer valuable processing resources, and is less prone to errors.

When used in this specification and claims, the terms "comprises" and "comprising" and variations thereof mean that the specified features, steps or integers are included. The terms are not to be interpreted to exclude the presence of other features, steps or components.

**Claims**

1. A safety system for a vehicle (1), the safety system comprising:

> a first sensor arrangement (4) to determine a current velocity of the vehicle (1);
> a second sensor arrangement (2) to detect a mobile object exterior to the vehicle (1), and determine a current position and velocity of the mobile object relative to the vehicle (1);
a safety device (6) which may be activated to protect an occupant of the vehicle (1) and/or the mobile object; and
a control unit (5) operable to:

receive and analyse signals from the first and second sensor arrangements (4, 2) determine whether the vehicle (1) will collide with the object if the current velocities of the vehicle (1) and of the object are maintained, and if so to determine the time and position of the collision; and
generate an activation signal to activate the safety device (6) based on the analysis of the signals from the first and second sensor arrangements (4, 2),
**characterized in that** the analysis of the signals from the first and second sensor arrangements (4, 2) comprises:

defining a vehicle front line extending across all or part of the front of the vehicle (1), and calculating likely future movement of the front line through space to determine a vehicle plane, in both space and time coordinates, comprising the future path of the vehicle front line through space based on the calculated likely future movement of the front line;
defining an expected future trajectory for the mobile object; and
calculating the position and time of an intersection between the vehicle plane and the expected future trajectory of the mobile object, wherein the calculated position includes a position of the intersection along the vehicle front line.

2. A safety system according to claim 1, wherein:

the first sensor arrangement is operable to determine a current acceleration of the vehicle (1); and
the calculation of the likely future movement of the front line through space assumes that the current acceleration of the vehicle (1) will be maintained.

3. A safety system according to claim 1 or 2, wherein:

the second sensor arrangement (2) is operable to determine a current acceleration of the mobile object; and
the defining of the expected future trajectory of the mobile object assumes that the current acceleration of the mobile object will be maintained.

4. A safety system according to claim 3, when dependent upon claim 2, wherein the calculated time of the intersection is

$$t = \frac{-B \pm \sqrt{B^2 - 2CA}}{C}$$

Where A represents the calculated position of the vehicle (1) relative to the object, B represents the calculated speed of the vehicle (1) relative to the object, and C represents the calculated acceleration of the vehicle (1) relative to the object.

5. A safety system according to claim 4, wherein

$$A = \begin{vmatrix} a_x & f'_{sx} \\ a_y & f'_{sy} \end{vmatrix}, \ B = \begin{vmatrix} b_x & f'_{sx} \\ b_y & f'_{sy} \end{vmatrix}, \ C = \begin{vmatrix} c_x & f'_{sx} \\ c_y & f'_{sy} \end{vmatrix},$$

Where:

$a_x$ and $a_y$ represent the zero order component of a polynomial representing the difference between the position of the vehicle (1) and the position of the mobile object along the x and y axes;
$b_x$ and $b_y$ represent the first order component of a polynomial representing the difference between the velocity of the vehicle (1) and the velocity of the mobile object along the x and y axes;
$c_x$ and $c_y$ represent the second order component of a polynomial representing the difference between the acceleration of the vehicle (1) and the acceleration of the mobile object along the x and y axes; and

$f'_{sx}$ and $f'_{sy}$ represent the rate of change of the line parallel to the front bumper of the vehicle (1) along the x and y axes.

6. A safety system according to claim 4 or 5, wherein the yaw rate of both the vehicle (1) and the mobile object are assumed to be zero.

7. A safety system according to any one of claims 4 to 6, wherein the position of the intersection along the vehicle (1) front line is calculated as:

$$s = -\vec{q}^{\mathsf{T}}\left(\vec{g}(t) - \vec{h}(t)\right)$$

Where:

g(t) describes the location of a point representing the position of the vehicle (1) over time;
h(t) describes the location of a point representing the position of the mobile object over time; and

q(t) represents the vector inverse of $f'_s$, which describes the orientation of a line parallel to the front bumper of the vehicle (1).

8. A safety system according to any preceding claim, wherein the formula for calculating the position and time of the intersection is stored in a memory of the vehicle (1), and is not calculated in real time.

9. A safety system according to any one of claims 1 to 3, wherein:

the first sensor arrangement (4) is operable to determine a current yaw rate of the vehicle (1); and
the calculation of the likely future movement of the front line through space assumes that the current yaw rate of the vehicle (1) will be maintained, and preferably also wherein:

the second sensor arrangement (2) is operable to determine a current yaw rate of the mobile object; and
the defining of the expected future trajectory of the mobile object assumes that the current yaw rate of the mobile object will be maintained.

10. A safety system according to claim 9, wherein the position and time of the intersection are calculated numerically.

11. A safety system according to any previous claim, wherein the mobile object is represented in the calculations by a single point in space.

12. A safety system according to any one of claims 1 to 10, wherein the mobile object is represented in the calculations by a plurality of points, and wherein the position and time of an intersection is calculated for each of the points.

13. A safety system according to claim 12, wherein the calculated position and time of the intersection between the vehicle (1) plane and the expected future trajectory of the mobile object is based on the one of the points which is calculated to intersect with the vehicle plane at the earliest time.

14. A vehicle (1) incorporating a safety system according to any preceding claim.

15. A method of controlling one or more safety devices of a vehicle (1), the method comprising the steps of:

determining a current velocity of the vehicle (1);
detecting a mobile object exterior to the vehicle (1), and determining a current position and velocity of the mobile object relative to the vehicle (1);
determining whether the vehicle (1) will collide with the object if the current velocities of the vehicle (1) and of the object are maintained, and if so determining the time and position of the collision; and
generating an activation signal to activate the safety system based on the determination, **characterized in that**

the determination comprises the steps of:

defining a vehicle front line extending across all or part of the front of the vehicle (1), and calculating likely future movement of the front line through space to determine a vehicle plane, in both space and time coordinates, comprising the future path of the vehicle front line through space based on the calculated likely future movement of the front line;
defining an expected future trajectory for the mobile object; and
calculating the position and time of an intersection between the vehicle plane and the expected future trajectory of the mobile object, wherein the calculated position includes a position of the intersection along the vehicle front line.

**Patentansprüche**

1. Sicherheitssystem für ein Fahrzeug (1), wobei das Sicherheitssystem umfasst:

Eine erste Sensoranordnung (4) zum Bestimmen einer aktuellen Geschwindigkeit des Fahrzeugs (1);
eine zweite Sensoranordnung (2) zum Erkennen eines mobilen Objekts außerhalb des Fahrzeugs (1), und Bestimmen einer aktuellen Position und Geschwindigkeit des mobilen Objekts relativ zum Fahrzeug (1);
eine Sicherheitsvorrichtung (6), die aktiviert werden könnte, um einen Insassen des Fahrzeugs (1) und/oder das mobile Objekt zu schützen; und eine Steuereinheit (5), die betreibbar ist, Folgendes zu tun:

Empfangen und Analysieren von Signalen ab den ersten und zweiten Sensoranordnungen (4, 2), um zu bestimmen, ob das Fahrzeug (1) mit dem Objekt zusammenstoßen wird, wenn die aktuellen Geschwindigkeiten des Fahrzeugs (1) und des Objekts beibehalten werden, und wenn ja, die Zeit und Position des Zusammenstoßes zu bestimmen; und
ein Aktivierungssignal zu generieren, um die Sicherheitsvorrichtung (6) auf Basis der Analyse der Signale von den ersten und zweiten Sensoranordnungen (4, 2) zu aktivieren,

**dadurch gekennzeichnet, dass** die Analyse der Signale von den ersten und zweiten Sensoranordnungen (4, 2) umfasst:

Definieren einer Frontlinie des Fahrzeugs, die sich über die Ganzheit oder einen Teil der Front des Fahrzeugs (1) erstreckt, und Berechnen wahrscheinlicher künftiger Bewegung der Frontlinie durch Raum, um eine Ebene des Fahrzeugs, in sowohl Raum- und Zeitkoordinaten, zu bestimmen, die den künftigen Weg der Frontlinie des Fahrzeugs durch Raum auf Basis der berechneten wahrscheinlichen künftigen Bewegung der Frontlinie umfasst;
Definieren einer erwarteten künftigen Bahn des mobilen Objekts; und Berechnen der Position und Zeit eines Schnittpunkts zwischen der Ebene des Fahrzeugs und der erwarteten künftigen Bahn des mobilen Objekts, wobei die berechnete Position eine Position des Schnittpunkts entlang der Frontlinie des Fahrzeugs einschließt.

2. Sicherheitssystem nach Anspruch 1, wobei:

Die erste Sensoranordnung betreibbar ist, eine aktuelle Beschleunigung des Fahrzeugs (1) zu bestimmen; und die Berechnung der wahrscheinlichen künftigen Bewegung der Frontlinie durch Raum annimmt, dass die aktuelle Beschleunigung des Fahrzeugs (1) beibehalten werden wird.

3. Sicherheitssystem nach Anspruch 1 oder 2, wobei:

Die zweite Sensoranordnung (2) betreibbar ist, eine aktuelle Beschleunigung des mobilen Objekts zu bestimmen; und
das Definieren der erwarteten künftigen Bahn des mobilen Objekts annimmt, dass die aktuelle Beschleunigung des mobilen Objekts beibehalten werden wird.

4. Sicherheitssystem nach Anspruch 3, wenn von Anspruch 2 abhängig, wobei die berechnete Zeit des Schnittpunkts ist

$$t = \frac{-B \pm \sqrt{B^2 - 2CA}}{C}$$

Wobei A die berechnete Position des Fahrzeugs (1) relativ zum Objekt repräsentiert, B die berechnete Geschwindigkeit des Fahrzeugs (1) relativ zum Objekt repräsentiert und C die berechnete Beschleunigung des Fahrzeugs (1) relativ zum Objekt repräsentiert.

5. Sicherheitssystem nach Anspruch 4, wobei

$$A = \begin{vmatrix} a_x & f'_{sx} \\ a_y & f'_{sy} \end{vmatrix}, B = \begin{vmatrix} b_x & f'_{sx} \\ b_y & f'_{sy} \end{vmatrix}, C = \begin{vmatrix} c_x & f'_{sx} \\ c_y & f'_{sy} \end{vmatrix},$$

Wobei:

$a_x$ und $a_y$ die Komponente nullter Ordnung eines Polynoms repräsentieren, welche die Differenz zwischen der Position des Fahrzeugs (1) und der Position des mobilen Objekts entlang der x- und y-Achsen repräsentiert;
$b_x$ und $b_y$ repräsentieren die Komponente erster Ordnung eines Polynoms, welche die Differenz zwischen der Geschwindigkeit des Fahrzeugs (1) und der Geschwindigkeit des mobilen Objekts entlang der x- und y-Achsen repräsentiert;
$c_x$ und $c_y$ repräsentieren die Komponente zweiter Ordnung eines Polynoms, welche die Differenz zwischen der Beschleunigung des Fahrzeugs (1) und der Beschleunigung des mobilen Objekts entlang der x und y-Achsen repräsentiert; und
$f'_{sx}$ und $f'_{sy}$ repräsentieren die Änderungsrate der Linie parallel zur Frontstoßstange des Fahrzeugs (1) entlang der x und y-Achsen.

6. Sicherheitssystem nach Anspruch 4 oder 5, wobei die Gierrate von sowohl des Fahrzeugs (1) als auch des mobilen Objekts als Null angenommen wird.

7. Sicherheitssystem nach einem der Ansprüche 4 bis 6, wobei die Position des Schnittpunkts entlang der Frontlinie des Fahrzeugs (1) berechnet wird als:

$$s = -\vec{q}^{\,T} \left( \vec{g}(t) - \vec{h}(t) \right)$$

Wobei:

g(t) den Ort eines Punkts beschreibt, der die Position des Fahrzeugs (1) im Zeitablauf repräsentiert;
h(t) den Ort eines Punkts beschreibt, der die Position des mobilen Objekts im Zeitablauf repräsentiert; und
q(t) den Vektor invers von $f'_s$ repräsentiert, der die Orientierung einer Linie parallel zur Frontstoßstange des Fahrzeugs (1) beschreibt.

8. Sicherheitssystem nach einem vorhergehenden Anspruch, wobei die Formel zur Berechnung der Position und Zeit des Schnittpunkts in einem Speicher des Fahrzeugs (1) gespeichert ist, und nicht in Echtzeit berechnet wird.

9. Sicherheitssystem nach einem der Ansprüche 1 bis 3, wobei:

Die erste Sensoranordnung (4) betreibbar ist, eine aktuelle Gierrate des Fahrzeugs (1) zu bestimmen; und die Berechnung der wahrscheinlichen künftigen Bewegung der Frontlinie durch Raum annimmt, dass die aktuelle Gierrate des Fahrzeugs (1) beibehalten werden wird, und vorzugsweise auch wobei:

Die zweite Sensoranordnung (2) betreibbar ist, eine aktuelle Gierrate des mobilen Objekts zu bestimmen; und
das Definieren der erwarteten künftigen Bahn des mobilen Objekts annimmt, dass die aktuelle Gierrate des mobilen Objekts beibehalten werden wird.

10. Sicherheitssystem nach Anspruch 9, wobei die Position und Zeit des Schnittpunkts numerisch berechnet sind.

11. Sicherheitssystem nach einem vorhergehenden Anspruch, wobei das mobile Objekt durch einen einzigen Punkt im Raum in den Berechnungen repräsentiert ist.

12. Sicherheitssystem nach einem der Ansprüche 1 bis 10, wobei das mobile Objekt in den Berechnungen durch eine Vielzahl von Punkten repräsentiert ist, und wobei die Position und Zeit eines Schnittpunkts für jeden der Punkte berechnet wird.

13. Sicherheitssystem nach Anspruch 12, wobei die berechnete Position und Zeit des Schnittpunkts zwischen der Ebene des Fahrzeugs (1) und der erwarteten künftigen Bahn des mobilen Objekts auf dem einen der Punkte beruht, der berechnet ist, sich mit der Ebene des Fahrzeugs zur frühesten Zeit zu schneiden.

14. Fahrzeug (1), das ein Sicherheitssystem nach einem vorhergehenden Anspruch enthält.

15. Verfahren zur Steuerung einer oder mehrerer Sicherheitsvorrichtungen eines Fahrzeugs (1), wobei das Verfahren folgende Schritte umfasst:

Bestimmen einer aktuellen Geschwindigkeit des Fahrzeugs (1);
Erkennen eines mobilen Objekts außerhalb des Fahrzeugs (1), und Bestimmen einer aktuellen Position und Geschwindigkeit des mobilen Objekts relativ zum Fahrzeug (1):

Bestimmen, ob das Fahrzeug (1) mit dem Objekt zusammenstoßen wird, wenn die aktuellen Geschwindigkeiten des Fahrzeugs (1) und des Objekts beibehalten werden, und wenn ja, Bestimmen der Zeit und Position des Zusammenstoßes; und
Generieren eines Aktivierungssignals zum Aktivieren des Sicherheitssystems auf Basis der Bestimmung, **dadurch gekennzeichnet, dass** die Bestimmung folgende Schritte umfasst:

Definieren einer Frontlinie des Fahrzeugs, die sich über die Ganzheit oder einen Teil der Front des Fahrzeugs (1) erstreckt, und Berechnen wahrscheinlicher künftiger Bewegung der Frontlinie durch Raum, um eine Ebene des Fahrzeugs, in sowohl Raum- und Zeitkoordinaten, zu bestimmen, die den künftigen Weg der Frontlinie des Fahrzeugs durch Raum auf Basis der berechneten wahrscheinlichen künftigen Bewegung der Frontlinie umfasst;
Definieren einer erwarteten künftigen Bahn für das mobile Objekt; und
Berechnen der Position und Zeit eines Schnittpunkts zwischen der Ebene des Fahrzeugs und der erwarteten künftigen Bahn des mobilen Objekts, wobei die berechnete Position eine Position des Schnittpunkts entlang der Frontlinie des Fahrzeugs einschließt.

**Revendications**

1. Un système de sécurité pour un véhicule (1), le système de sécurité comprenant :

un premier ensemble de détection (4) pour déterminer une vitesse actuelle du véhicule (1) ;
un deuxième ensemble de détection (2) pour détecter un objet mobile à l'extérieur du véhicule (1), et déterminer une position et une vitesse actuelles de l'objet mobile par rapport au véhicule (1) ;
un dispositif de sécurité (6) qui peut être activé pour protéger un occupant du véhicule (1) et/ou de l'objet mobile ; et
une unité de commande (5) servant à :

recevoir et analyser des signaux issus par les premier et deuxième ensembles de détection (4, 2)
déterminer si le véhicule (1) va entrer en collision avec l'objet si les vitesses actuelles du véhicule (1) et de l'objet sont maintenues, et si cela est le cas déterminer le moment et la position de la collision ; et
générer un signal d'activation pour activer le dispositif de sécurité (6) sur la base de l'analyse des signaux issus par les premier et deuxième ensembles de détection (4, 2),

**caractérisé par le fait que** l'analyse des signaux issus par les premier et deuxième ensembles de détection (4, 2) comprend les étapes consistant à :

définir une ligne avant du véhicule s'étendant sur la totalité ou une partie de l'avant du véhicule (1), et calculer le futur mouvement probable de la ligne avant à travers l'espace pour déterminer un plan du véhicule, en coordonnées d'espace et de temps, comprenant le futur trajet de la ligne avant du véhicule à travers l'espace sur la base du futur mouvement probable calculé de la ligne avant ;

définir une future trajectoire attendue pour l'objet mobile ; et

calculer la position et le moment d'une intersection entre le plan du véhicule et la future trajectoire attendue de l'objet mobile, la position calculée comprenant une position de l'intersection le long de la ligne avant du véhicule.

2. Un système de sécurité selon la revendication 1, dans lequel :

le premier ensemble de détection sert à déterminer une accélération actuelle du véhicule (1) ; et

le calcul du futur mouvement probable de la ligne avant à travers l'espace assume que l'accélération actuelle du véhicule (1) sera maintenue.

3. Un système de sécurité selon la revendication 1 ou 2, dans lequel :

le deuxième ensemble de détection (2) sert à déterminer une accélération actuelle de l'objet mobile ; et

la définition de la future trajectoire attendue de l'objet mobile assume que l'accélération actuelle de l'objet mobile sera maintenue.

4. Un système de sécurité selon la revendication 3, quand elle dépend de la revendication 2, dans lequel le moment calculé de l'intersection est

$$t = \frac{-B \pm \sqrt{B^2 - 2\mathrm{CA}}}{\mathrm{C}}$$

où A représente la position calculée du véhicule (1) par rapport à l'objet, B représente la vitesse calculée du véhicule (1) par rapport à l'objet, et C représente l'accélération calculée du véhicule (1) par rapport à l'objet.

5. Un système de sécurité selon la revendication 4, dans lequel

$$A = \begin{vmatrix} a_x & f'_{sx} \\ a_y & f'_{sy} \end{vmatrix}, B = \begin{vmatrix} b_x & f'_{sx} \\ b_y & f'_{sy} \end{vmatrix}, C = \begin{vmatrix} c_x & f'_{sx} \\ c_y & f'_{sy} \end{vmatrix},$$

où :

$a_x$ et $a_y$ représentent la composante d'ordre zéro d'un polynôme représentant la différence entre la position du véhicule (1) et la position de l'objet mobile le long des axes x et y ;

$b_x$ et $b_y$ représentent la composante de premier ordre d'un polynôme représentant la différence entre la vitesse du véhicule (1) et la vitesse de l'objet mobile le long des axes x et y;

$c_x$ et $c_y$ représentent la composante de deuxième ordre d'un polynôme représentant la différence entre l'accélération du véhicule (1) et l'accélération de l'objet mobile le long des axes x et y ; et

$f'_{sx}$ et $f'_{sy}$ représentent le taux de variation de la ligne parallèle au pare-chocs avant du véhicule (1) le long des axes x et y.

6. Un système de sécurité selon la revendication 4 ou 5, dans lequel la vitesse de lacet du véhicule (1) et de l'objet mobile est assumée comme zéro.

7. Un système de sécurité selon une quelconque des revendications 4 à 6, dans lequel la position de l'intersection le long de la ligne avant du véhicule (1) ligne est calculée comme :

$$s = -\vec{q}^{\,T}\left(\vec{g}(t) - \vec{h}(t)\right)$$

où :

g(t) décrit l'emplacement d'un point représentant la position du véhicule (1) dans le temps ;
h(t) décrit l'emplacement d'un point représentant la position de l'objet mobile dans le temps ; et
q(t) représente le vecteur inverse de f'$_s$, qui décrit l'orientation d'une ligne parallèle au pare-chocs avant du véhicule (1).

8. Un système de sécurité selon une quelconque revendication précédente, dans lequel la formule utilisée pour calculer la position et le moment de l'intersection est sauvegardée dans une mémoire du véhicule (1), et n'est pas calculée en temps réel.

9. Un système de sécurité selon une quelconque des revendications 1 à 3, dans lequel :

le premier ensemble de détection (4) sert à déterminer une vitesse de lacet actuelle du véhicule (1) ; et
le calcul du futur mouvement probable de la ligne avant à travers l'espace assume que la vitesse de lacet actuelle du véhicule (1) sera maintenue, et de préférence en outre dans lequel :

le deuxième ensemble de détection (2) sert à déterminer une vitesse de lacet actuelle de l'objet mobile ; et
la définition de la future trajectoire attendue de l'objet mobile assume que la vitesse de lacet actuelle de l'objet mobile sera maintenue.

10. Un système de sécurité selon la revendication 9, dans lequel la position et le moment de l'intersection sont calculés numériquement.

11. Un système de sécurité selon une quelconque des revendications précédentes, dans lequel l'objet mobile est représenté dans les calculs par un point unique dans l'espace.

12. Un système de sécurité selon une quelconque des revendications 1 à 10, dans lequel l'objet mobile est représenté dans les calculs par une pluralité de points, et dans lequel la position et le moment d'une intersection sont calculés pour chacun des points.

13. Un système de sécurité selon la revendication 12, dans lequel la position et le moment calculés de l'intersection entre le plan du véhicule (1) et la future trajectoire attendue de l'objet mobile sont basés sur celui des points qui selon les calculs va couper le plan du véhicule au premier moment.

14. Un véhicule (1) incorporant le système de sécurité selon une quelconque revendication précédente.

15. Un procédé pour contrôler un ou plusieurs dispositifs de sécurité d'un véhicule (1), le procédé comprenant les étapes consistant à :

déterminer une vitesse actuelle du véhicule (1) ;
détecter un objet mobile à l'extérieur du véhicule (1), et déterminer une position et une vitesse actuelles de l'objet mobile par rapport au véhicule (1) ;
déterminer si le véhicule (1) va entrer en collision avec l'objet si les vitesses actuelles du véhicule (1) et de l'objet sont maintenues, et si cela est le cas déterminer le moment et la position de la collision ; et
générer un signal d'activation pour activer le dispositif de sécurité sur la base de la détermination, **caractérisé par le fait que** la détermination comprend les étapes consistant à :

définir une ligne avant du véhicule s'étendant sur la totalité ou une partie de l'avant du véhicule (1), et calculer le mouvement futur probable de la ligne avant à travers l'espace pour déterminer un plan du véhicule, en coordonnées d'espace et de temps, comprenant le futur trajet de la ligne avant du véhicule à travers l'espace sur la base du futur mouvement probable calculé de la ligne avant ;
définir une future trajectoire attendue pour l'objet mobile ; et
calculer la position et le moment d'une intersection entre le plan du véhicule et la future trajectoire attendue de l'objet mobile, la position calculée comprenant une position de l'intersection le long de la ligne avant du véhicule.

-2-

-5-

-3-

-4-

-6-

1

FIG    1

s

1

t

FIG    2

1

t

FIG    3

FIG 4

FIG 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20160075332 A
- EP 2918467 A
- US 2012035846 A1
- US 2016075322 A1